# EUROPEAN PATENT SPECIFICATION

(11) **EP 3 919 537 B1**
(45) Date of publication and mention of the grant of the patent: **01.05.2024**
(21) Application number: 20187068.0
(22) Date of filing: 21.07.2020
(51) Int. Cl.: C08G 18/18, C08G 18/20, C08G 18/22, C08G 18/32, C08G 18/40, C08G 18/42, C08G 18/48, C08G 18/50, C08G 18/66, C08G 18/76, C08J 9/00, C08J 9/14, C08G 101/00

(54) **METHOD FOR PREPARING A RIGID POLYURETHANE FOAM**
VERFAHREN ZUR HERSTELLUNG EINES STARREN POLYURETHANSCHAUMSTOFFS
PROCÉDÉ DE PRÉPARATION D'UNE MOUSSE DE POLYURÉTHANE RIGIDE

(30) Priority: 01.06.2020 CN 202010487179
(43) Date of publication of application: 08.12.2021
(73) Proprietor: Covestro Deutschland AG, 51373 Leverkusen (DE)
(72) Inventor: TONG, Jun, 200129 Pudong District Shanghai (CN)
(74) Representative: Levpat

(56) References cited:
- US-A1- 2002 169 227
- US-A1- 2018 134 861
- US-A1- 2019 322 791

## Description

### Technical field

The present invention relates to a method for preparing a rigid polyurethane foam, the rigid polyurethane foam prepared by the method and use thereof in molded polyurethane composites and heat insulating materials.

### Prior art

As a mature technical product, rigid polyurethane foam at present has been widely used in many fields, such as construction, transportation, home appliances, sports equipment, etc. A rigid foam is usually formed by mixing an isocyanate component (e.g., PAPI) with substances containing active hydrogen (e.g., a polyether polyol, a polyester polyol, polyol with low molecular weight, an amino polyol with low molecular weight, a polyol amine with low molecular weight, etc.), a surfactant, a catalyst (e.g., a tertiary amine, a quaternary ammonium salt, an alkali metal carboxylate, etc.) and a foaming agent (e.g., water, pentane, a hydrofluorocarbon, a vinyl hydrochlorofluorocarbon, etc.) and then forming a rigid foam body using processes such as spray coating, casting or pouring, etc. In the application fields in which molding of foams is required, the demolding time has to be controlled due to the consideration of production efficiency. Therefore, rigid foam bodies generally do not reach the theoretical sufficient curing degree within the limited time period for curing and demolding. Moreover, the core of the foam body has a relatively high temperature within a short time after demolding, such that the core of the foam is in a nearly viscoelastic state. If the initial strength of the foam body is lower than the expansion internal pressure of the core of the foam, the foam body will generate expansion at the thickness direction (i.e., post-expansion) much larger than that has been expected.

The industry attempts to improve the curing degree of the foam body by extending the demolding time of the molding process, thereby solving the problem of excessive post-expansion. Attempts are also made to reduce post-expansion of foams by increasing the average cross-linking degree of the reactive component with active hydrogen, e.g., by replacing long-chain polyols for providing rigid foam bodies with appropriate flexibility with short-chain polyether polyols having high cross-linking degrees, but it will reduce the tenacity of the rigid foam bodies and even the bonding force of the foam bodies with substrates/surface materials.

CN1578797A discloses a method of making rigid polyurethane foams, including mixing an isocyanate component with a polyol component in the presence of at least one polyfunctional (meth)acrylate compound containing an average of at least 2 acrylate or methacrylate groups per molecule and a weight per acrylate or methacrylate group of 300 daltons or less and (iii) at least one catalyst for the reaction of a polyol or water with a polyisocyanate and, subjecting the mixture to conditions sufficient to cause the isocyanate component and polyol component to react and the polyfunctional (meth)acrylate compound to polymerize, thereby forming a rigid polyurethane foam.

CN1178803A discloses a method for producing rigid polyurethane foams having improved heat distortion resistance and reduced thermal conductivity by reacting polyisocyanates with compounds containing hydrogen atoms reactive towards isocyanate, prepared by addition of ethylene oxide and/or propylene oxide onto a hexitol or a hexitol mixture, with the total hexitol content of the polyol mixture being from 15 to 30% by weight based on the polyol mixture, and another polyol prepared by addition of ethylene oxide and/or propylene oxide onto one or more aromatic amines, with the total amine content of the polyol mixture being from 1 to 10% by weight based on the polyol mixture.

CN103214651A discloses a process for preparing polyurethane rigid foams by using a short-chain polyether polyol with a high proportion of aliphatic diamine as a starter and an aromatic polyester polyol, which is applied in outdoor waterproof and thermal insulation of buildings having weatherproof and waterproof requirements.

US 2018/0134861 A1 discloses phase stable isocyanate-reactive components comprising a blend of blowing agents, rigid foams made from these isocyanate-reactive components which comprise a blend of blowing agents, and a process for preparing these rigid foams, which eliminate the use of HFC's yet provide rigid polyurethane foams having excellent thermal conductivity, a high dosed cell content, and a low density, all while maintaining acceptable compressive strength and dimensional stability.

US 2002/0169227 A1 discloses that polyurethane foams containing a syntactic phase and a cellular, non-syntactic phase are useful as reinforcing foams, such as in automotive applications. The foams are conveniently made in the reaction of a high viscosity isocyanate-reactive component and a highviscosity polyisocyanate component, at least one of which contains a plurality of hollow microspheres.

US 2019/0322791 A1 discloses rigid polyurethane foam-forming compositions, rigid polyurethane foams, and methods for their production, as well as composite articles comprising such foams sandwiched between facer substrates, including use of such composite elements for side-wall and/or roof insulating elements for refrigerated tractor trailers. The rigid polyurethane foams are produced from an isocyanate-reactive component comprising: (1) a polyol blend; (2) a halogenated hydroolefin; (3) a surfactant; (4) water; and (5) a tertiary amine catalyst composition.

Despite the above disclosures, the industry still needs optimized methods for preparing rigid polyurethane foams.

### Summary of the invention

One aspect of the present invention is to provide a method for preparing a rigid polyurethane foam by the reaction of a polyurethane reaction system comprising the following components:
component A comprising a polyisocyanate;
component B comprising
B1) a polyether polyol having a functionality of 3.0 to 8.0, preferably 3.0 to 6.0, a weight average molecular weight of 350 to 900 g/mol, preferably 400 to 900 g/mol (measured according to ISO14900-2017), in an amount of 50 to 80 pbw, preferably 55 to 75 pbw, based on 100 pbw of component B;
B2) a hydroxyl-terminated polyether polyol started with a polyamine having a functionality of 4.0, a weight average molecular weight of 550 to 750 g/mol, preferably 550 to 700 g/mol (measured according to ISO14900-2017), in an amount of 6 to 15 pbw, preferably 6 to 12 pbw, based on 100 pbw of component B;
B3) an aromatic polyester polyol having a functionality of 2.0 to 2.4, a weight average molecular weight of 300 to 650 g/mol, preferably 300 to 600 g/mol (measured according to ISO 14900-2017), in an amount of 3.0 to 10.0 pbw, preferably 3.0 to 9.0 pbw, based on 100 pbw of component B;
B4) a polyether amine having a functionality of 2 to 3, a weight average molecular weight of 1200 to 2000 g/mol, preferably 1300 to 2000 g/mol (measured according to ISO14900-2017).

Preferably, the component A comprises
A1) an isocyanate having a functionality ≥ 2, preferably at least one of polymeric diphenylmethane diisocyanate, 4,4'-diisocyanato-diphenylmethane, 2,4'-diisocyanato-diphenylmethane, or a prepolymer or a mixture thereof.

Preferably, the component B4) is in an amount of 2 to 10 pbw, preferably 2 to 7 pbw, based on 100 pbw of component B.

Preferably, the component B further comprises
B5) at least one tertiary amine catalyst, in an amount of 0.8 to 2.5 pbw, preferably 0.8 to 2.2 pbw, based on 100 pbw of component B;
B6) water in an amount of 0.7 to 2.0 pbw, preferably 0.7 to 1.8 pbw, based on 100 pbw of component B.

Preferably, the component B further comprises
B7) at least one physical foaming agent, in an amount of 8.0 to 25 pbw, preferably 8.0 to 22 pbw, based on 100 pbw of component B;
B8) at least one chain extender with low molecular weight, preferably diethanolamine, triethanolamine, diisopropanolamine, triisopropanolamine, the chain extender with low molecular weight being in an amount of 1 to 2.4 pbw, preferably 1.2 to 2.4 pbw, based on 100 pbw of component B.

Preferably, the component B further comprises
B9) at least one silicone surfactant, preferably silicone oil, in an amount of 1.0 to 2.5 pbw, preferably 1.2 to 2.5 pbw, based on 100 pbw of component B.

Preferably, the component B further comprises
B10) at least one organometallic catalyst, in an amount of 0.1 to 0.7 pbw, preferably 0.1 to 0.6 pbw, based on 100 pbw of component B.

Preferably, the physical foaming agent is selected from at least one of n-pentane, cyclopentane, isopentane, pentafluoropropane HFC-245fa (CF₃CH₂CHF₂), hexafluorobutane HFC-365mfc(CF₃CH₂CF₂CH₃), monochlorotrifluoroethylene LBA (ClCHCHCF₃) or any mixture thereof.

Preferably, the rigid polyurethane foam made from the polyurethane reaction system to which a polyether amine is added has a bonding force increase ≥ 15%, preferably ≥ 18%, as compared with the rigid polyurethane foam made from the polyurethane reaction system to which no polyether amine is added.

We unexpectedly discovered that the method for preparing a rigid polyurethane foam of the present invention provides a rigid polyurethane foam made from a reaction system comprising components such as a polyether amine, and appropriate isocyanates and polyols, etc. The method not only requires no expensive long-chain polyether polyols which are usually added, but also provides a rigid polyurethane foam with more excellent physical properties. Specifically, on the one hand, the bonding force of the foam is enhanced, and on the other hand, the expansion of the foam after demolding is well controlled. A more satisfying rigid polyurethane foam is obtained while saving the cost.

Another aspect of the present invention is to provide a rigid polyurethane foam, which is prepared by the method for preparing a rigid polyurethane foam of the present invention.

Preferably, the rigid polyurethane foam has a core density of 37 to 100 kg/m³, preferably 37 to 70 kg/m³ (measured according to ISO 291:1997).

Preferably, the rigid polyurethane foam has a bonding force ≥ 29 N, preferably ≥ 30 N (measured when pulling in the vertical direction using a force gauge, evaluated according to adhesion condition at the bonding interface of foams).

Preferably, the rigid polyurethane foam made from the polyurethane reaction system to which a polyether amine is added has a bonding force increase ≥ 15%, preferably ≥ 18%, as compared with the rigid polyurethane foam made from the polyurethane reaction system to which no polyether amine is added.

Still another aspect of the present invention is to provide use of the rigid polyurethane foam in polyurethane composites. Preferably, the polyurethane composites are molded rigid polyurethane composites.

Yet another aspect of the present invention is to provide a polyurethane product, comprising the rigid polyurethane foam of the present invention.

Preferably, the polyurethane product is selected from a refrigerator, a freezer, a cold box, an insulation barrel, an insulation box and a rigid polyurethane composite profile.

### Embodiments

The following terms used in the present invention have the following definitions or explanations.

The term "pbw" refers to parts by weight of components of the polyurethane reaction system.

The term "functionality" refers to the value determined according to the industry formula: functionality = hydroxyl value * molecular weight / 56100, wherein the molecular weight is determined by GPC high performance liquid chromatography, measured according to GB/T 21863-2008.

### Components of the polyurethane foam reaction system

### A) Polyisocyanate

Any organic polyisocyanates can be used to prepare the soft high resilience polyurethane foams of the present invention, including aromatic, aliphatic and alicyclic polyisocyanates, and combinations thereof. The polyisocyanates can be represented by the general formula R(NCO)ₙ, wherein R represents an aliphatic hydrocarbon group having 2 to 18 carbon atoms, an aromatic hydrocarbon group having 6 to 15 carbon atoms, or an araliphatic hydrocarbon group having 8 to 15 carbon atoms, and n = 2 to 4.

Useful polyisocyanates include, but are not limited to, vinyl diisocyanate, tetramethylene 1,4-diisocyanate, hexane diisocyanate (HDI), dodecyl 1,2-diisocyanate, cyclobutane-1,3-diisocyanate, cyclohexane-1,3-diisocyanate, cyclohexane-1,4-diisocyanate, 1-isocyanato-3,3,5-trimethyl-5-isocyanatomethylcyclohexane, hexahydrotoluene-2,4-diisocyanate, hexahydrophenyl-1,3-diisocyanate, hexahydrophenyl-1,4-diisocyanate, perhydrodiphenylmethane-2,4-diisocyanate, perhydrodiphenylmethane-4,4-diisocyanate, phenylene-1,3-diisocyanate, phenylene-1,4-diisocyanate, stilbene-1,4-diisocyanate, 3,3-dimethyl-4,4-diphenyldiisocyanate, toluene-2,4-diisocyanate (TDI), toluene-2,6-diisocyanate (TDI), diphenylmethane-2,4'-diisocyanate (MDI), diphenylmethane-2,2'-diisocyanate (MDI), diphenylmethane-4,4'-diisocyanate (MDI), a mixture of diphenylmethane diisocyanates and/or their homologues having more rings, polyphenyl polymethylene polyisocyanate (poly-MDI), naphthylene-1,5-diisocyanate (NDI), their isomers, any mixture of them and their isomers.

Useful polyisocyanates also include isocyanates modified by carbodiimide, allophanate, referably, but not limited to, diphenylmethane diisocyanates, diphenylmethane diisocyanates modified by carbodiimide, their isomers, mixtures of them and their isomers.

The polyisocyanates, when used in the present invention, include isocyanate dimers, trimers, tetramers, or combinations thereof.

In a preferred embodiment of the present invention, isocyanates include
A1) an isocyanate having a functionality ≥ 2, preferably at least one of polymeric diphenylmethane diisocyanate, 4,4'-diisocyanato-diphenylmethane, 2,4'-diisocyanato-diphenylmethane, or a prepolymer or a mixture thereof.

### B) Polyol

The polyols of the present invention can be polyether polyols, polyester polyols, polycarbonate polyols, and/or mixtures thereof.

The polyols of the present invention are preferably one or more polyether polyols, wherein at least one polyether polyol is a polyether polyol with a multifunctional alcohol with low molecular weight as a starter. The polyether polyols have a functionality of 2 to 8, preferably 3 to 6, and a hydroxyl value of 20 to 1200 mg KOH/g, preferably 20 to 800 mg KOH/g.

The polyether polyols can be prepared by known processes. Usually, they are prepared from ethylene oxide or propylene oxide with ethylene glycol, 1,2-propylene glycol, 1,3-propylene glycol, diethylene glycol, glycerol, trimethylolpropane, pentaerythritol, triethanolamine, toluenediamine, sorbitol, sucrose or any combination thereof as a starter.

In addition, the polyether polyols can also be prepared by reacting at least one alkylene oxide containing an alkylene group of 2 to 4 carbon atoms with a compound containing 2 to 8, preferably but not limited to 3 to 6 active hydrogen atoms or another reactive compound in the presence of a catalyst.

Examples of the catalyst are alkali metal hydroxides such as sodium hydroxide, potassium hydroxide, or alkoxides of alkali metals such as sodium methoxide, sodium ethoxide, potassium ethoxide or potassium isopropoxide.

Useful alkylene oxides include, but are not limited to, tetrahydrofuran, ethylene oxide, 1,2-propylene oxide, 1,2-butylene oxide, 2,3-butylene oxide, styrene oxide, and any mixture thereof.

Useful compounds containing active hydrogen atoms include polyhydroxy compounds, preferably, but not limited to, water, ethylene glycol, 1,2-propylene glycol, 1,3-propylene glycol, diethylene glycol, trimethylolpropane, any mixture thereof, more preferably polyols, especially alcohols with three or more hydroxy groups, such as glycerol, trimethylolpropane, pentaerythritol, sorbitol and sucrose. Useful compounds containing active hydrogen atoms also include, preferably but not limited to, organic dicarboxylic acids such as succinic acid, adipic acid, phthalic acid, and terephthalic acid, or aromatic or aliphatic substituted diamines such as ethylene diamine, diethylene triamine, triethylene tetramine, propylene diamine, butylene diamine, hexamethylene diamine or toluene diamine.

Other useful reactive compounds include ethanolamine, diethanolamine, methylethanolamine, ethylethanolamine, methyldiethanolamine, ethyldiethanolamine, triethanolamine and ammonia.

The polyether polyol prepared with an amine as a starter includes the compound obtained from the reaction of amine as a starter with an alkylene oxide compound.

When used in the present invention, the term "alkylene oxide compound" refers generally to a compound having the following general formula (I): 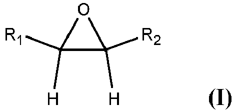 wherein R₁ and R₂ are independently selected from H, C₁-C₆ linear and branched alkyl groups, and phenyl group and substituted phenyl groups.

Preferably, R₁ and R₂ are independently selected from H, methyl, ethyl, propyl and phenyl.

A person skilled in the art knows a method for preparing an "alkylene oxide compound", which can be obtained, for example, by the oxidation reaction of an olefin compound.

Examples of alkylene oxide compounds that can be used in the present invention include, but are not limited to ethylene oxide, 1,2-propylene oxide, 1,2-butylene oxide, 2,3-butylene oxide, styrene oxide or a mixture thereof, particularly preferably a mixture of ethylene oxide and 1,2-propylene oxide. When used in the present invention, the term "alkylene oxide compound" also includes oxacycloalkanes, examples of which include, but are not limited to, tetrahydrofuran and oxetane.

When used in the present invention, the term "amine" refers to a compound containing a primary amino group, a secondary amino group, a tertiary amino group, or a combination thereof. Examples of compounds that can be used as the amine of the present invention include, but are not limited to, triethanolamine, ethylene diamine, toluene diamine, diethylene triamine, triethylene tetramine and derivatives thereof, preferably ethylene diamine, toluene diamine, particularly preferably toluene diamine.

The polyester polyols are prepared by reacting a dicarboxylic acid or a dicarboxylic anhydride with a polyol. The dicarboxylic acid is preferably, but not limited to, an aliphatic carboxylic acid having 2 to 12 carbon atoms, for example, succinic acid, malonic acid, glutaric acid, adipic acid, suberic acid, azelaic acid, sebacic acid, dodecanedioic acid, maleic acid, fumaric acid, phthalic acid, isophthalic acid, terephthalic acid, and mixtures thereof. The dicarboxylic anhydride is preferably, but not limited to, phthalic anhydride, tetrachlorophthalic anhydride, maleic anhydride, and mixtures thereof. The polyol is preferably, but not limited to, ethylene glycol, diethylene glycol, 1,2-propylene glycol, 1,3-propylene glycol, dipropylene glycol, 1,3-methylpropanediol, 1,4-butanediol, 1,5-pentanediol, 1,6-hexanediol, neopentyl glycol, 1,10-decanediol, glycerol, trimethylolpropane, or mixtures thereof. The polyester polyols also include those made from lactones. The polyester polyols made from lactones are preferably, but not limited to, those made from ε-caprolactone.

The polycarbonate polyols are preferably, but not limited to, polycarbonate diols. The polycarbonate diols are prepared by reacting a glycol with a dihydrocarbyl or diaryl carbonate or phosgene. The glycol is preferably, but not limited to, 1,2-propylene glycol, 1,3-propylene glycol, 1,4-butanediol, 1,5-pentanediol, 1,6-hexanediol, diethylene glycol, trioxymethylene glycol or a mixture thereof. The dihydrocarbyl or diaryl carbonate is preferably, but not limited to, diphenyl carbonate.

Preferably, the polyols of the present invention comprise at least one of the following components:
B1) a polyether polyol having a functionality of 3.0 to 8.0, preferably 3.0 to 6.0, a weight average molecular weight of 350 to 900 g/mol, preferably 400 to 900 g/mol (measured according to ISO14900-2017), in an amount of 50 to 80 pbw, preferably 55 to 75 pbw, based on 100 pbw of component B;
B2) a hydroxyl-terminated polyether polyol started with a polyamine having a functionality of 4.0, a weight average molecular weight of 550 to 750 g/mol, preferably 550 to 700 g/mol (measured according to ISO14900-2017), in an amount of 6 to 15 pbw, preferably 6 to 12 pbw, based on 100 pbw of component B;
B3) an aromatic polyester polyol having a functionality of 2.0 to 2.4, a weight average molecular weight of 300 to 650 g/mol, preferably 300 to 600 g/mol (measured according to ISO 14900-2017), in an amount of 3.0 to 10.0 pbw, preferably 3.0 to 9.0 pbw, based on 100 pbw of component B.

### Foaming agent

The foaming agents of the present invention can be various physical foaming agents and/or chemical foaming agents.

Useful foaming agents include water, halogenated hydrocarbons, hydrocarbon compounds or the like. Useful halogenated hydrocarbons are preferably pentafluorobutane, pentafluoropropane, monochlorotrifluoropropene, hexafluorobutene, HCFC-141b (monofluorodichloroethane), HFC-365mfc (pentafluorobutane), HFC-245fa (pentafluoropropane) or any mixture thereof. Useful hydrocarbon compounds include also butane, pentane, cyclopentane (CP), hexane, cyclohexane, heptane, and any mixture thereof, preferably at least one of n-pentane, cyclopentane, isopentane, pentafluoropropane (HFC-245fa, CF₃CH₂CHF₂), hexafluorobutane (HFC-365mfc, CF₃CH₂CF₂CH₃), monochlorotrifluoroethylene (LBA, ClCHCHCF₃) or any mixture thereof.

The foaming agent of the present invention preferably comprises water, in an amount of 0.7 to 2.0 pbw, preferably 0.7 to 1.8 pbw, based on 100 pbw of component B.

Preferably, the component B further comprises at least one physical foaming agent, in an amount of 8.0 to 25 pbw, preferably 8.0 to 22 pbw, based on 100 pbw of component B.

### Catalyst

The catalysts of the present invention preferably include at least one of a tertiary amine catalyst and a metallic catalyst. The tertiary amine catalyst includes, but is not limited to, one, two or more of triethyl amine, tributyl amine, dimethyl ethanolamine, bis(dimethylaminoethyl)ether, triethylene diamine, N-ethyl morpholine, N,N,N',N'-tetramethyl ethylene diamine, pentamethyl diethylene triamine, dimethylaminopropylene diamine, N,N,N',N'-tetramethyl dipropylene triamine and weak acid-modified products of the amine catalysts. Preferably, the tertiary amine catalyst is in an amount of 0.8 to 2.5 pbw, preferably 0.8 to 2.2 pbw, based on 100 pbw of component B.

Preferably, the organometallic catalyst is selected from alkyl tin mercaptide, alkyl tin mercaptoacetate, long-chain alkyl tin carboxylate, cobalt naphthenate, alkali metal carboxylate, or any combination thereof. The organometallic catalyst is in an amount of 0.1 to 0.7 pbw, preferably 0.1 to 0.6 pbw, based on 100 pbw of component B.

### Surfactant

In the embodiments of the present invention, the polyurethane reaction system of the present invention further comprises at least one surfactant, wherein the surfactant is preferably, but not limited to, siloxane derivative of alkylene oxide copolymer. The surfactant is in an amount of 1.0 to 2.5 pbw, preferably 1.2 to 2.5 pbw, based on 100 pbw of component B.

### Chain extender

Chain extender useful in the present invention is selected from multifunctional alcohol or amine compounds with low molecular weight containing hydroxyl groups or amino groups. Common alcohol chain extenders include 1,4-butanediol (BDO), 1,6-hexanediol, glycerin, trimethylolpropane, diethylene glycol (DEG), triethylene glycol, neopentyl glycol (NPG), sorbitol, diethylaminoethanol (DEAE), etc. The chain extenders with low molecular weight of the present invention are preferably diethanolamine, triethanolamine, diisopropanolamine, triisopropanolamine, the chain extender with low molecular weight being in an amount of 1 to 2.4 pbw, preferably 1.2 to 2.4 pbw, based on 100 pbw of component B.

The polyurethane reaction system of the present invention further comprises a polyether amine. A polyether amine is a type of polyolefin compound terminated with a primary or secondary amino group having a soft polyether backbone. The basic structure thereof contains at least one polyalkylene glycol functional group which is the key to its properties. Polyalkylene glycol functional groups can improve the water solubility of polyether amines, and at the same time will affect the melting point and the viscosity of polyether amines. Examples are polyoxyethylene diamine, polyoxypropylene diamine, polyoxyethylene/oxypropylene diamine, polyoxypropylene triamine, polytetramethylene ether diamine, etc. Most of these compounds are obtained from the corresponding polyether polyols as the raw materials by chemical treatment of terminal hydroxyl groups. Polyether amines can be divided into two types, aromatic and aliphatic polyether amines, according to the structure of the hydrocarbon group connected to the terminal amino group. They are usually a light yellow or colorless transparent liquid at room temperature, and have the advantages of low viscosity, low vapor pressure and high primary amine content. They are soluble in solvents like ethanol, aliphatic hydrocarbons, aromatic hydrocarbons, esters, glycol ethers, ketones and water, and are a type of polymers whose main chain is a polyether structure and the terminal active functional group is an amine group. Polyether amines are obtained by amination of polyethylene glycol, polypropylene glycol or ethylene glycol/propylene glycol copolymers at high temperatures and high pressures. In industrial production, polyether amines are usually prepared by ammonolysis and leaving group methods. Processes for the synthesis of polyether amines include two processes, batch process and continuous process. It is well known in the art that the production process used by the Huntsman company is a continuous fixed-bed process, in which polyether amines are synthesized under the catalysis of a metallic catalyst supported by a carrier.

Polyether amines can be used as a high-performance curing agent for epoxy resins, in the production of high-strength, high-tenacity composites, as well as coatings, accessories and cleaning agents. It is well known to persons skilled in the art that polyether amines are used as the main raw material to participate in the polymerization in the field of polyurethane polyurea elastomers, but have not been used as curing agents or chain extenders in rigid polyurethane foam foaming systems.

Specifically, the polyurethane reaction system of the present invention comprises B4) a polyether amine having a functionality of 2 to 3, a weight average molecular weight of 1200 to 2000 g/mol, preferably 1300 to 2000 g/mol (measured according to ISO14900-2017), in an amount of 2 to 10 pbw, preferably 2 to 7 pbw, based on 100 pbw of component B.

Through experiments, we unexpectedly found that the method of the present invention is simple and efficient, and a rigid polyurethane foam with more superior physical properties is prepared from the reaction system containing components such as a polyether amine, and appropriate isocyanate and polyol. The method of the present invention enhances the bonding force of the foam on the one hand, and controls well the expansion of the rigid polyurethane foam after demolding on the other hand.

### Examples

The methods for testing properties are explained as follows:
Core density refers to the density of the center of a foam tested in the case of overfilling in the mold used in the production of polyurethane composite boards, namely the density of the molded foam core, measured according to ISO 291:1997;

Post-expansion: components A and B were mixed and then injected quantitatively into a temperature-controlled metal square mold with a filling density of 50 kg/m³, after which the mold was closed. After the curing time set as 7 minutes, the mold was opened and the foam block was taken out. 3 minute after demolding, the foam block was placed on a thickness gauge to measure the real-time thickness value t at the center of the foam block. The percentage of thickness expansion relative to the thickness of the mold of 100 mm, ((t-100)×100%), is the post-expansion according to the present invention.

Foam/substrate bonding force: components A and B were mixed and then injected quantitatively into a temperature-controlled metal square mold equipped with a 50 mm×50 mm steel plate at the bottom with a filling density of 50 kg/m³, after which the mold was closed. After the curing time set as 7 minutes, the mold was opened and the foam block was taken out. 2 hours after the rigid polyurethane foam was demolded, the interface pull-out force was measured using a hand-held force gauge. During the measurement, the hook of the force gauge was used to hook the edge of the steel plate, and the direction of the pulling force was perpendicular to the plane of the steel plate. During the process of pulling the steel plate out off the foam block completely, the maximum value displayed on the force gauge was recorded as the interface bonding force, that is, the bonding force according to the present invention.

The raw materials and the test methods in the Examples are explained as follows:
Raw material 1: Desmophen4030, a polyether polyol with a sucrose/diethylene glycol combination as a starter, functionality 5.8, hydroxyl value 380 mg KOH/g, from Covestro Polymers (China) Co., Ltd.;
Raw material 2: DC4110, a polyether polyol with a sucrose/diethylene glycol combination as a starter, functionality 4.2, hydroxyl value 410 mg KOH/g, from Ningwu Chemical Co., Ltd.;
Raw material 3: Desmophen26HK69, a polyether polyol with toluenediamine as a starter, functionality 4.0, hydroxyl value 350 mg KOH/g, from Covestro Polymers (China) Co., Ltd.;
Raw material 4: CAED-2000, polyether amine, molecular weight 2000, functionality 2.0, hydroxyl value 56 mg KOH/g, from Yangzhou Chenhua New Materials Co., Ltd;
Raw material 5: DC-210, a polyether polyol with propylene glycol as a starter, functionality 2.0, hydroxyl value 112 mg KOH/g, from Ningwu Chemical Co., Ltd.;
Raw material 6: PS-3152, an aromatic polyester polyol, molecular weight 360, functionality 2.0, hydroxyl value 315 mg KOH/g, from Jinling Stepan Chemical Co., Ltd;
Raw material 7: Triethanolamine, technical grade, from BASF Company;
Raw material 8: PC-8 (N,N-dimethylcyclohexylamine), from Air Products Company;
Raw material 9: K-15 (2-potassium isooctanoate), from Air Products Company;
Raw material 10: PC-41, tri-(bis-dimethylaminopropyl)hexahydrotriazine, from Air Products Company;
Raw material 11: Cyclopentane, from Shandong Sirloong Chemical Co., Ltd.;
Raw material 12: Surfactant AK8830 for polyurethane rigid foam, from Nanjing Maysta Chemical Co., Ltd;
Raw material 13: Isocyanate Desmodur44V20, from Covestro Polymers (China) Co., Ltd.

### Preparation of rigid polyurethane foams

The components of the isocyanate-reactive component B (i.e., component B) as shown in Table 1 were added to a clean vessel. They were stirred with a turbo agitator at 1000 rpm for 3 minutes for uniform mixing. Under the condition of setting the raw material temperature as about 23±2°C, the isocyanate component A and the isocyanate-reactive component B were weighed according to the ratio shown in Table 1, and mixed by mechanical stirring, after which the mixture was injected into a metal square mold (300mm*300mm*100mm) with a temperature controlled at about 40°C for reaction and curing to give a rigid polyurethane foam.

**Table 1- Ratios and Properties of Examples and Comparative Examples**

| | | Raw material No. | Comp. Ex. 1 | Comp. Ex. 2 | Ex. 1 | Ex. 2 | Ex. 3 |
|---|---|---|---|---|---|---|---|
| Isocyanate-reactive component B | | Raw material 1 | 52.5 | 53.5 | 52.5 | 52.5 | 52.0 |
| | | Raw material 2 | 14.3 | 15.7 | 15 | 14.3 | 13.5 |
| | | Raw material 3 | 8.6 | 8.6 | 8.6 | 8.6 | 8.6 |
| | | Raw material 4 | / | / | 3.0 | 4.4 | 6.7 |
| | | Raw material 5 | 4.4 | 0 | / | / | / |
| | | Raw material 6 | 4.3 | 6.3 | 5.0 | 4.3 | 3.0 |
| | | Raw material 7 | 2.0 | 2.0 | 2.0 | 2.0 | 2.0 |
| | | Raw material 8 | 0.68 | 0.68 | 0.68 | 0.68 | 0.68 |
| | | Raw material 9 | 0.12 | 0.12 | 0.12 | 0.12 | 0.12 |
| | | Raw material 10 | 0.24 | 0.24 | 0.24 | 0.24 | 0.24 |
| | | Raw material 11 | 10.0 | 10.0 | 10.0 | 10.0 | 10.0 |
| | | Raw material 12 | 1.72 | 1.72 | 1.72 | 1.72 | 1.72 |
| | | Deionized water | 1.19 | 1.19 | 1.19 | 1.19 | 1.19 |
| NCO index: 1.08 | | | | | | | |

| Isocyanate component A | | Raw material 13 | 108 | 110.8 | 108.9 | 107.4 | 106.1 |
|---|---|---|---|---|---|---|---|
| Properties | Raw material temperature | | | 23±2°C | | | |
| | Stirrer | | 7 cm turbo agitator, 2500 rpm, stirring time 15 seconds | | | | |
| | Post-expansion | | 4.7% | 1.90% | 2.6% | 3.0% | 3.5% |
| | Foam/substrate bonding force | Color coated steel plate | 27.5N | 22.5N | 32.5N | 37.5N | 40.0N |

As can be known from the above experimental data, the rigid polyurethane foam made from the polyurethane reaction system to which polyether amine was added has a relatively great improvement in the bonding force as compared with the rigid polyurethane foam made from the polyurethane reaction system to which no polyether amine was added. Specially, long-chain polyether polyols which are usually added were no longer added in Examples 1 to 3, but these Examples still result in rigid polyurethane foams having more superior physical properties.

Specifically, it can be known that Comparative Example 1 is a typical molded polyurethane rigid foam system having a substrate protective outer layer applied for thermal insulation/heat barrier, in which the foam keeps a suitable bonding force to substrate as well as an acceptable expansion after demolding by adding a certain amount of the long-chain polyether (raw material 5). If a higher bonding force to substrate is desired, the dose of the long-chain polyether (raw material 5) has to be increased, but it will soften the foam and deteriorate the post-expansion after demolding. If less or even no long-chain polyether (raw material 5) is added, it is possible to obtain a molded foam with a low post-expansion after demolding, but the bonding force of the foam to the substrate will be sacrificed, as shown in Comparative Example 2. In Examples 1-3, through the addition of polyether amines having a molecular weight ≤ 2000, the expansion after demolding and the bonding force to substrate are balanced and controllable.

Although the present invention has disclosed the above preferred examples, it is not intended to limit the present invention. Any person skilled in the art can make various changes and modifications without departing from the scope of the present invention. The protection scope of the present invention shall be based on the scope of the claims.

## Claims

1. A method for preparing a rigid polyurethane foam by the reaction of a polyurethane reaction system comprising the following components:
component A, comprising a polyisocyanate;
component B, comprising
B1) a polyether polyol having a functionality of 3.0 to 8.0, preferably 3.0 to 6.0, a weight average molecular weight of 350 to 900 g/mol, preferably 400 to 900 g/mol, measured according to ISO 14900-2017, in an amount of 50 to 80 pbw, preferably 55 to 75 pbw, based on 100 pbw of component B;
B2) a hydroxyl-terminated polyether polyol started with a polyamine having a functionality of 4.0, a weight average molecular weight of 550 to 750 g/mol, preferably 550 to 700 g/mol, measured according to ISO 14900-2017, in an amount of 6 to 15 pbw, preferably 6 to 12 pbw, based on 100 pbw of component B;
B3) an aromatic polyester polyol having a functionality of 2.0 to 2.4, a weight average molecular weight of 300 to 650 g/mol, preferably 300 to 600 g/mol, measured according to ISO14900-2017, in an amount of 3.0 to 10.0 pbw, preferably 3.0 to 9.0 pbw, based on 100 pbw of component B;
B4) a polyether amine having a functionality of 2 to 3, a weight average molecular weight of 1200 to 2000 g/mol, preferably 1300 to 2000 g/mol, measured according to ISO14900-2017.

2. The method according to claim 1, **characterized in that** the component A comprises
A1) an isocyanate having a functionality ≥ 2, preferably at least one of polymeric diphenylmethane diisocyanate, 4,4'-diisocyanato-diphenylmethane, 2,4'-diisocyanato-diphenylmethane, or a prepolymer or a mixture thereof.

3. The method according to claim 1 or 2, **characterized in that** the B4) polyether amine is in an amount of 2 to 10 pbw, preferably 2 to 7 pbw, based on 100 pbw of component B.

4. The method according to any of the preceding claims, **characterized in that** the component B further comprises
B5) at least one tertiary amine catalyst, in an amount of 0.8 to 2.5 pbw, preferably 0.8 to 2.2 pbw, based on 100 pbw of component B.

5. The method according to any of the preceding claim, **characterized in that** the rigid polyurethane foam made from the polyurethane reaction system to which a polyether amine is added has a bonding force increase ≥ 15%, preferably ≥ 18%, determined according to the method identified in the Examples section of the description, as compared with the rigid polyurethane foam made from the polyurethane reaction system to which no polyether amine is added.

6. The method according to any of the preceding claim, **characterized in that** the component B further comprises
B6) water in an amount of 0.7 to 2.0 pbw, preferably 0.7 to 1.8 pbw, based on 100 pbw of component B.

7. The method according to any of the preceding claim, **characterized in that** the component B further comprises
B7) at least one physical foaming agent, in an amount of 8.0 to 25 pbw, preferably 8.0 to 22 pbw, based on 100 pbw of component B.

8. The method according to claim 7, **characterized in that** the physical foaming agent is selected from at least one of n-pentane, cyclopentane, isopentane, pentafluoropropane, hexafluorobutane and monochlorotrifluoroethylene or any mixture thereof.

9. A rigid polyurethane foam, prepared by the method for preparing a rigid polyurethane foam according to any of claims 1 to 8.

10. The rigid polyurethane foam according to claim 9, **characterized in that** the rigid polyurethane foam has a core density of 37 to 100 kg/m³, preferably 37 to 70 kg/m³, measured according to ISO 291:1997.

11. The rigid polyurethane foam according to claim 9 or 10, **characterized in that** the rigid polyurethane foam made from the polyurethane reaction system to which a polyether amine is added has a bonding force increase ≥ 15%, preferably ≥ 18%, determined according to the method identified in the Examples section of the description, as compared with the rigid polyurethane foam made from the polyurethane reaction system to which no polyether amine is added.

12. The rigid polyurethane foam according to any of claims 9 to 11, **characterized in that** the rigid polyurethane foam has a bonding force ≥ 29 N, preferably ≥ 30 N, determined according to the method identified in the Examples section of the description.

13. Use of the rigid polyurethane foam according to any of claims 9 to 12 in polyurethane composites.

14. A polyurethane product, comprising the rigid polyurethane foam according to any of claims 9 to 12.

15. The polyurethane product according to claim 14, **characterized in that** the polyurethane product is selected from a refrigerator, a freezer, a cold box, an insulation barrel, an insulation box and a rigid polyurethane composite profile.

## Patentansprüche

1. Verfahren zur Herstellung eines Polyurethanhartschaumstoffs durch die Umsetzung eines Polyurethan-Reaktionssystems, das die folgenden Komponenten umfasst:
Komponente A, umfassend ein Polyisocyanat;
Komponente B, umfassend
B1) ein Polyetherpolyol mit einer Funktionalität von 3,0 bis 8,0, vorzugsweise 3,0 bis 6,0, einem gewichtsgemittelten Molekulargewicht von 350 bis 900 g/mol, vorzugsweise 400 bis 900 g/mol, gemessen gemäß ISO14900-2017, in einer Menge von 50 bis 80 Gewichtsteilen, vorzugsweise 55 bis 75 Gewichtsteilen, bezogen auf 100 Gewichtsteile an Komponente B;
B2) ein polyamingestartetes, hydroxyterminiertes Polyetherpolyol mit einer Funktionalität von 4,0, einem gewichtsgemittelten Molekulargewicht von 550 bis 750 g/mol, vorzugsweise 550 bis 700 g/mol, gemessen gemäß ISO14900-2017, in einer Menge von 6 bis 15 Gewichtsteilen, vorzugsweise 6 bis 12 Gewichtsteilen, bezogen auf 100 Gewichtsteile an Komponente B;
B3) ein aromatisches Polyesterpolyol mit einer Funktionalität von 2,0 bis 2,4, einem gewichtsgemittelten Molekulargewicht von 300 bis 650 g/mol, vorzugsweise 300 bis 600 g/mol, gemessen gemäß ISO14900-2017, in einer Menge von 3,0 bis 10,0 Gewichtsteilen, vorzugsweise 3,0 bis 9,0 Gewichtsteilen, bezogen auf 100 Gewichtsteile an Komponente B;
B4) ein Polyetheramin mit einer Funktionalität von 2 bis 3, einem gewichtsgemittelten Molekulargewicht von 1200 bis 2000 g/mol, vorzugsweise 1300 bis 2000 g/mol, gemessen gemäß IS014900-2017.

2. Verfahren gemäß Anspruch 1, **dadurch gekennzeichnet, dass** die Komponente A umfasst:
A1) ein Isocyanat mit einer Funktionalität von ≥ 2, vorzugsweise wenigstens eines von polymerem Diphenylmethandiisocyanat, 4,4'-Diisocyanatdiphenylmethan, 2,4'-Diisocyanatdiphenylmethan, oder ein Präpolymer oder ein Gemisch davon.

3. Verfahren gemäß Anspruch 1 oder 2, **dadurch gekennzeichnet, dass** das B4) Polyetheramin in einer Menge von 2 bis 10 Gewichtsteilen, vorzugsweise 2 bis 7 Gewichtsteilen, bezogen auf 100 Gewichtsteile an Komponente B vorhanden ist.

4. Verfahren gemäß einem der vorstehenden Ansprüche, **dadurch gekennzeichnet, dass** die Komponente B ferner umfasst:
B5) wenigstens einen tertiäres-Amin-Katalysator in einer Menge von 0,8 bis 2,5 Gewichtsteilen, vorzugsweise 0,8 bis 2,2 Gewichtsteilen, bezogen auf 100 Gewichtsteile an Komponente B.

5. Verfahren gemäß einem der vorstehenden Ansprüche, **dadurch gekennzeichnet, dass** der aus dem Polyurethan-Reaktionssystem, zu dem ein Polyetheramin zugegeben ist, hergestellte Polyurethanhartschaumstoff eine Bindungskrafterhöhung von ≥ 15 %, vorzugsweise ≥ 18 %, bestimmt gemäß dem in dem Beispielabschnitt der Beschreibung angegebenen Verfahren, im Vergleich zu dem aus dem Polyurethan-Reaktionssystem, zu dem kein Polyetheramin zugegeben ist, hergestellten Polyurethanhartschaumstoff aufweist.

6. Verfahren gemäß einem der vorstehenden Ansprüche, **dadurch gekennzeichnet, dass** die Komponente B ferner umfasst:
B6) Wasser in einer Menge von 0,7 bis 2,0 Gewichtsteilen, vorzugsweise 0,7 bis 1,8 Gewichtsteilen, bezogen auf 100 Gewichtsteile an Komponente B.

7. Verfahren gemäß einem der vorstehenden Ansprüche, **dadurch gekennzeichnet, dass** die Komponente B ferner umfasst:
B7) wenigstens ein physikalisches Treibmittel in einer Menge von 8,0 bis 25 Gewichtsteilen, vorzugsweise 8,0 bis 22 Gewichtsteilen, bezogen auf 100 Gewichtsteile an Komponente B.

8. Verfahren gemäß Anspruch 7, **dadurch gekennzeichnet, dass** das physikalische Treibmittel ausgewählt ist aus wenigstens einem von n-Pentan, Cyclopentan, Isopentan, Pentafluorpropan, Hexafluorbutan und Monochlortrifluorethylen oder einem beliebigen Gemisch davon.

9. Polyurethanhartschaumstoff, hergestellt durch das Verfahren zur Herstellung eines Polyurethanhartschaumstoffs gemäß einem der Ansprüche 1 bis 8.

10. Polyurethanhartschaumstoff gemäß Anspruch 9, **dadurch gekennzeichnet, dass** der Polyurethanhartschaumstoff eine Kerndichte von 37 bis 100 kg/m³, vorzugsweise 37 bis 70 kg/m³, gemessen gemäß ISO 291:1997, aufweist.

11. Polyurethanhartschaumstoff gemäß Anspruch 9 oder 10, **dadurch gekennzeichnet, dass** der aus dem Polyurethan-Reaktionssystem, zu dem ein Polyetheramin zugegeben ist, hergestellte Polyurethanhartschaumstoff eine Bindungskrafterhöhung von ≥ 15 %, vorzugsweise ≥ 18 %, bestimmt gemäß dem in dem Beispielabschnitt der Beschreibung angegebenen Verfahren, im Vergleich zu dem aus dem Polyurethan-Reaktionssystem, zu dem kein Polyetheramin zugegeben ist, hergestellten Polyurethanhartschaumstoff aufweist.

12. Polyurethanhartschaumstoff gemäß einem der Ansprüche 9 bis 11, **dadurch gekennzeichnet, dass** der Polyurethanhartschaumstoff eine Bindungskraft von ≥ 29 N, vorzugsweise ≥ 30 N, bestimmt gemäß dem in dem Beispielabschnitt der Beschreibung angegebenen Verfahren, aufweist.

13. Verwendung des Polyurethanhartschaumstoffs gemäß einem der Ansprüche 9 bis 12 in Polyurethan-Verbundstoffen.

14. Polyurethanprodukt, umfassend den Polyurethanhartschaumstoff gemäß einem der Ansprüche 9 bis 12.

15. Polyurethanprodukt gemäß Anspruch 14, **dadurch gekennzeichnet, dass** das Polyurethanprodukt ausgewählt ist aus einem Kühlschrank, einem Gefrierschrank, einer Kühlbox, einer Isolierhülse, einer Isolierbox und einem Polyurethan-Hartverbundstoffprofil.

## Revendications

1. Procédé de préparation d'une mousse de polyuréthane rigide par la réaction d'un système de réaction de polyuréthane comprenant les composants suivants :
composant A, comprenant un polyisocyanate ;
composant B, comprenant
B1) un polyéther polyol ayant une fonctionnalité de 3,0 à 8,0, de préférence 3,0 à 6,0, un poids moléculaire moyen en poids de 350 à 900 g/mole, de préférence 400 à 900 g/mole, mesuré selon la norme ISO 14900-2017, en une quantité de 50 à 80 parties en poids, de préférence 55 à 75 parties en poids, sur la base de 100 parties en poids du composant B ;
B2) un polyéther polyol à terminaison hydroxyle initié par une polyamine ayant une fonctionnalité de 4,0, un poids moléculaire moyen en poids de 550 à 750 g/mole, de préférence 550 à 700 g/mole, mesuré selon la norme ISO 14900-2017, en une quantité de 6 à 15 parties en poids, de préférence 6 à 12 parties en poids, sur la base de 100 parties en poids du composant B ;
B3) un polyester polyol aromatique ayant une fonctionnalité de 2,0 à 2,4, un poids moléculaire moyen en poids de 300 à 650 g/mole, de préférence 300 à 600 g/mole, mesuré selon la norme ISO 14900-2017, en une quantité de 3,0 à 10,0 parties en poids, de préférence 3,0 à 9,0 parties en poids, sur la base de 100 parties en poids du composant B ;
B4) une polyéther amine ayant une fonctionnalité de 2 à 3, un poids moléculaire moyen en poids de 1 200 à 2 000 g/mole, de préférence 1 300 à 2 000 g/mole, mesuré selon la norme ISO 14900-2017.

2. Procédé selon la revendication 1, **caractérisé en ce que** le composant A comprend
A1) un isocyanate ayant une fonctionnalité ≥ 2, de préférence au moins l'un parmi un diisocyanate de diphénylméthane polymérique, le 4,4'-diisocyanato-diphénylméthane, le 2,4'-diisocyanato-diphénylméthane, ou un prépolymère ou un mélange correspondant.

3. Procédé selon la revendication 1 ou 2, **caractérisé en ce que** la polyéther amine B4) est présente en une quantité de 2 à 10 parties en poids, de préférence 2 à 7 parties en poids, sur la base de 100 parties en poids du composant B.

4. Procédé selon l'une quelconque des revendications précédentes, **caractérisé en ce que** le composant B comprend également
B5) au moins un catalyseur de type amine tertiaire, en une quantité de 0,8 à 2,5 parties en poids, de préférence 0,8 à 2,2 parties en poids, sur la base de 100 parties en poids du composant B.

5. Procédé selon l'une quelconque des revendications précédentes, **caractérisé en ce que** la mousse de polyuréthane rigide fabriquée à partir du système de réaction de polyuréthane auquel une polyéther amine est ajoutée a une augmentation de force de liaison ≥ 15 %, de préférence ≥ 18 %, déterminée selon le procédé identifié dans la section Exemples de la description, par rapport à la mousse de polyuréthane rigide fabriquée à partir du système de réaction de polyuréthane auquel aucune polyéther amine n'est ajoutée.

6. Procédé selon l'une quelconque des revendications précédentes, **caractérisé en ce que** le composant B comprend également
B6) de l'eau en une quantité de 0,7 à 2,0 parties en poids, de préférence 0,7 à 1,8 parties en poids, sur la base de 100 parties en poids du composant B.

7. Procédé selon l'une quelconque des revendications précédentes, **caractérisé en ce que** le composant B comprend également
B7) au moins un agent moussant physique, en une quantité de 8,0 à 25 parties en poids, de préférence 8,0 à 22 parties en poids, sur la base de 100 parties en poids du composant B.

8. Procédé selon la revendication 7, **caractérisé en ce que** l'agent moussant physique est sélectionné parmi au moins l'un parmi le n-pentane, le cyclopentane, l'isopentane, le pentafluoropropane, l'hexafluorobutane et le monochlorotrifluoroéthylène ou un quelconque mélange correspondant.

9. Mousse de polyuréthane rigide, préparée par le procédé pour la préparation d'une mousse de polyuréthane rigide selon l'une quelconque des revendications 1 à 8.

10. Mousse de polyuréthane rigide selon la revendication 9, **caractérisée en ce que** la mousse de polyuréthane rigide possède une densité de noyau de 37 à 100 kg/m³, de préférence 37 à 70 kg/m³, mesurée selon la norme ISO 291:1997.

11. Mousse de polyuréthane rigide selon la revendication 9 ou 10, **caractérisée en ce que** la mousse de polyuréthane rigide fabriquée à partir du système de réaction de polyuréthane auquel une polyéther amine est ajoutée a une augmentation de force de liaison ≥ 15 %, de préférence ≥ 18 %, déterminée selon le procédé identifié dans la section Exemples de la description, par rapport à la mousse de polyuréthane rigide fabriquée à partir du système de réaction de polyuréthane auquel aucune polyéther amine n'est ajoutée.

12. Mousse de polyuréthane rigide selon l'une quelconque des revendications 9 à 11, **caractérisée en ce que** la mousse de polyuréthane rigide a une force de liaison ≥ 29 N, de préférence ≥ 30 N, déterminée selon le procédé identifié dans la section Exemples de la description.

13. Utilisation de la mousse de polyuréthane rigide selon l'une quelconque des revendications 9 à 12 dans des composites de polyuréthane.

14. Produit de polyuréthane, comprenant la mousse de polyuréthane rigide selon l'une quelconque des revendications 9 à 12.

15. Produit de polyuréthane selon la revendication 14, **caractérisé en ce que** le produit de polyuréthane est sélectionné parmi un réfrigérateur, un congélateur, une boîte froide, un tonneau isolant, une boîte isolante et un profilé composite de polyuréthane rigide.
